(19) Europäisches Patentamt
European Patent Office
Office européen des brevets

(11) Veröffentlichungsnummer: **0 525 234 B1**

# (12) EUROPÄISCHE PATENTSCHRIFT

(45) Veröffentlichungstag der Patentschrift: **20.09.95**

(51) Int. Cl.$^6$: **B60K 28/16**, F02P 5/15, F02D 17/02, //F02D41/12

(21) Anmeldenummer: **91112827.0**

(22) Anmeldetag: **30.07.91**

## (54) Schaltungsanordnung zum Regeln des Antriebes eines Kraftfahrzeugs.

(43) Veröffentlichungstag der Anmeldung:
**03.02.93 Patentblatt 93/05**

(45) Bekanntmachung des Hinweises auf die Patenterteilung:
**20.09.95 Patentblatt 95/38**

(84) Benannte Vertragsstaaten:
**DE FR GB IT**

(56) Entgegenhaltungen:
**EP-A- 0 140 208**
**EP-A- 0 287 862**
**EP-A- 0 334 370**
**EP-A- 0 434 970**
**EP-A- 0 283 453**
**EP-A- 0 309 868**
**EP-A- 0 387 874**
**DE-A- 3 802 710**

(73) Patentinhaber: **SIEMENS AKTIENGESELL-SCHAFT**
**Wittelsbacherplatz 2**
**D-80333 München (DE)**

(72) Erfinder: **Achleitner, Erwin, Dr. Dipl.-Ing.**
**Hadamarstrasse 30**
**W-8400 Regensburg (DE)**
Erfinder: **Reupke, Wolfgang, Dipl.-Ing.**
**Wassergasse 1**
**W-8400 Regensburg (DE)**
Erfinder: **Kettl, Ludwig, Dipl.-Ing. FH**
**Bachstrasse 3**
**W-8441 Aiterhofen (DE)**
Erfinder: **Weber, Gerald, Dipl.-Ing.**
**Böhmerwaldstrasse 11**
**W-8411 Sinzing (DE)**

**EP 0 525 234 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung nach dem Oberbegriff von Anspruch 1. Solche Schaltungsanordnungen dienen dazu, instabile Fahrzustände von Kraftfahrzeugen zu verhindern, wenn die zwischen den Rädern und der Fahrbahn zu übertragenden Kräfte größer als die Haftreibung sind. Insbesondere gehört hierzu die Antischlupfregelung, die ein Durchdrehen der Räder beim Anfahren verhindert.

Bei einem bekannten Antischlupfregelungssystem (ASR) für ein Fahrzeug mit automatischem Getriebe wird, wenn mindestens ein angetriebenes Rad zum Durchdrehen neigt, dieses Rad abgebremst und zusätzlich das Getriebe in einen höheren Gang geschaltet (EP 0 180 033 A1). Beide Maßnahmen sind aber nicht in allen Fällen günstig.

Bei einem anderen bekannten ASR-System wird dann, wenn die Änderungsgeschwindigkeit eines angetriebenen Rades zu groß ist, das Motordrehmoment verringert, indem unter anderem die Zündung nach spät verschoben oder ein Teil der Zylinder abgeschaltet wird (GB 2 158 270 A). Einzelheiten der Regelung sind allerdings nicht erläutert.

Mit einem ebenfalls bekannten Steuersystem zum Optimieren der Wirkung der Antriebsräder wird bei durchdrehenden Rädern zunächst der Kraftstoff für einen Zylinder zurückgenommen, dann abgeschaltet und - sofern dies nicht ausreicht - weitere Zylinder abgeschaltet (DE-PS 32 24 254).

Bei einer anderen bekannten ASR-Regelung (EP-A 0 387 874) wird ein Schlupf aus der Drehzahldifferenz zwischen angetriebenen und nicht angetriebenen Rädern erkannt und daraufhin das Motordrehmoment durch Abschalten eines oder mehrerer Zylinder und/oder durch Verstellen des Zündwinkels reduziert. Um zu verhindern, daß durch zu häufiges Ab- und Anschalten von Zylindern sich unverbrannter Kraftstoff in diesen ansammelt und dadurch zu einem Flammrückschlag in den Ansaugtrakt und zu einer Beschädigung des Katalysators führt, wird nach einer Abschaltung von Zylindern eine Sperrzeit vorgegeben, während der ein erneutes Zu- oder Abschalten von Zylindern unterbunden wird. Das Motordrehmoment wird dadurch verringert, daß der optimale Zündwinkel berechnet und anschießend ggf. einer oder mehrere Zylinder abgeschaltet werden, und zwar in Abhängigkeit von dem Verhältnis eines Zieldrehmoments zu dem maximalen Motordrehmoment. Anschließend wird eine Zündwinkeländerung berechnet, die ebenfalls von dem genannten Momentenverhältnis und außerdem von der Gesamtzylinderzahl und der Anzahl der abgeschalteten Zylinder abhängt, und die zu einer Zündwinkel-Spätverstellung führt. Es wird also eine Zylinderabschaltung und gegebenenfalls zusätzlich eine Zündwinkelverstellung durchgeführt.

Der Erfindung liegt die Aufgabe zugrunde, eine Antriebsregelung für Kraftfahrzeuge zu schaffen, mit der die zwischen den angetriebenen Rädern und der Fahrbahn übertragenen Kräfte sehr feinfühlig so dosiert werden, daß kein unzulässiger Schlupf zwischen Rad und Fahrbahn auftritt.

Diese Aufgabe wird erfindungsgemäß durch eine Schaltungsanordnung nach Anspruch 1 gelöst.

Die Unteransprüche sind auf vorteilhafte Weiterbildungen der Erfindung gerichtet.

Die Vorteile der Erfindung liegen insbesondere darin, daß mit ihr über einen weiten Motordrehzahl- und -drehmoment-Bereich eine feinfühlige Antischlupf- und Motorschleppmoment-Regelung möglich ist. Außerdem sind keine zusätzlichen Bauteile für eine elektronische Gaspedalsteuerung erforderlich.

Ausführungsbeispiele der Erfindung werden im folgenden anhand der Zeichnung erläutert. Es zeigen:

- Figur 1 ein Blockschaltbild einer Schaltungsanordnung nach der Erfindung,
- Figur 2 ein Diagramm zur Erläuterung der Betriebszustände der Schaltungsanordnung nach Figur 1 in Abhängigkeit von dem Steuersignal,
- Figur 3 ein Diagramm zur Erläuterung der um Wirkungweise der Antischlupfregelung,
- Figur 4 ein Diagramm zur Erläuterung der Motorschleppregelung.

Eine Schaltungsanordnung 1 zum Regeln des Antriebs eines Kraftfahrzeugs weist - soweit hier von Interesse - ein ASR-Steuergerät 2 und ein Motor-Steuergerät 3 auf (Figur 1).

Über eine Schnittstelle 4 kommen drehzahlproportionale Signale von nicht dargestellten Radimpulssensoren an: VR Drehzahl des rechten Vorderrades, VL Drehzahl des linken Vorderrades, HR Drehzahl des rechten Hinterrades und HL Drehzahl des linken Hinterrades.

Die Signale VR, VL, HR und HL werden in dem ASR-Steuergerät 2 ausgewertet, das ein Steuersignal TV_DIF ABS erzeugt und über eine Leitung 6 an das Motorsteuergerät 3 abgibt. Dieses Signal ist ein Maß für den Radschlupf, d.h. für die Geschwindigkeitsdifferenz V_DIF zwischen den angetriebenen Rädern und der Fahrbahn, und wird deshalb im folgenden auch als Schlupfsignal bezeichnet. Da die nicht angetriebenen oder geschleppten Räder keinen Schlupf aufweisen, wird zum Ermitteln der Geschwindigkeitsdifferenz die Geschwindigkeit über der Fahrbahn durch die Geschwindigkeit der nicht angetriebenen Hinterräder ersetzt. Das Schlupfsignal wird somit folgendermaßen ermittelt:

$$TV_DIF\ ABS \quad V_DIF = \frac{V_{VL} + V_{VR}}{2} - \frac{V_{HL} + V_{HR}}{2}$$

Das Motorsteuergerät 3 erhält von dem ASR-Steuergerät 2 das Signal TV__DIF__ABS, das ein Maß für die erforderliche Reduzierung oder Erhöhung des Motordrehmoments darstellt, als pulsweitenmoduliertes (PWM-)Signal. Es kann aber auch in einer für eine Übertragung über einen Bus geeigneten Form codiert sein. Dieses Signal wird in dem Motorsteuergerät zum Zwecke einer gleitenden Mittelwertbildung nach folgender Vorschrift gefiltert:

$$TV__DIF_n = TV__DIF_{n-1} + (TV__DIF__ABS - TV__DIF_{n-1}) * MITKO__TV__DIF$$

hierin sind

| | |
|---|---|
| $TV__DIF_{n,\ n-1}$ | das gemittelte Schlupfsignal |
| TV__DIF__ABS | das ungefilterte Schlupfsignal und |
| MITKO__TV__DIF | eine Mittlungskonstante, mit der der Fahrbahnzustand bewertet wird und Schwingungen gedämpft werden. |

Statt in dem Motorsteuergerät 3 kann die Mittelwertbildung auch in einem das ASR-Steuergerät 2 ersetzenden ABS-Steuergerät durchgeführt werden, das dann ein bereits gemitteltes Schlupfsignal an das Motorsteuergerät 3 überträgt. Das Steuergerät 2 kann auch in das Motorsteuergerät 3 integriert oder mit ihm zusammengefaßt sein.

Ein ASR-Eingriff des Motorsteuergeräts 3 erfolgt, wenn das Antriebsmoment so groß ist, daß bei zu geringen Reibwerten der Fahrbahn die Antriebsräder durchdrehen. Bei zu großer Geschwindigkeit der Antriebsräder gegenüber den nicht angetriebenen Rädern wird von dem ASR-Steuergerät 2 ein PWM-Signal TV__DIF__ABS größer als 50 % ausgegeben (siehe auch die Beschreibung zu Figur 2). Das Motorsteuergerät 3 reduziert das Motormoment zuerst durch Rücknahme des Zündwinkels und bei sehr hohem Schlupf der Antriebsräder zusätzlich durch Abschalten der Einspritzung bei den einzelnen Zylindern (s. auch die Beschreibung zu Figur 3).

Die ASR-Funktionen werden in den Motorbetriebszuständen Teillast und Vollast aktiviert, wenn folgende Bedingungen erfüllt sind:

TV__DIF > TV__DIF__ASR, wobei TV__DIF__ASR als Schwelle den bei normalem Fahrbetrieb noch zulässigen Schlupf darstellt;

$$N \geqq KF__xx__NSOLL__LL__yy + NSOLL__ADD__ASR\ (NSOLL__ADD__ANF__ASR)$$

wobei

| | |
|---|---|
| N | die Drehzahl, |
| KF__xx__NSOLL__LL__yy | die Leerlaufsolldrehzahl, |
| NSOLL__ADD__ASR | eine additive Sicherheitsschwelle für den Leerlauf und |
| NSOLL__ADD__ANF__ASR | eine zweite Leerlaufschwelle zum sicheren Anfahren sind, |

und wenn

kein Diagnosefehler oder Meßfehler beim Signal TV__DIF vorliegt.

Ein solcher Diagnosefehler (vgl. Figur 2) bedeutet, daß Schlupfwerte gemeldet worden sind, die unrealistisch sind.

Bei einer Aktivierung der ASR-Funktion führt das Motorsteuergerät 3 zusätzlich folgende Maßnahmen durch:

- es wird keine Vollastanreicherung ausgeführt,
- ein Wiedereinsetzen (nach einer Schubabschaltung) wird ggf. abgebrochen,
- die Klopfregelung wird gesperrt,
- die Lambda-Regelung und Lambda-Adaption werden gesperrt und
- die Tankentlüftung wird gesperrt.

Diese zusätzlichen Maßnahmen werden durchgeführt, damit sich die verschiedenen Regelvorgänge nicht gegenseitig überschneiden und außerdem zum Schutz des Katalysators.

Am Ende des ASR-Regelvorgangs wird die Lamda-Regelung wie nach einer Schubabschaltung wieder eingeschaltet, d.h. sie wird für eine vorgegebene Regelungszyklenzahl gesperrt, bis sich die Verbrennungsvorgänge stabilisiert haben.

Der ASR-Vorgang wird abgebrochen, wenn folgende Motorbetriebszustände vorliegen:

- ein Diagnosefehler beim Schlupfsignal TV__DIF,
- Schubabschaltung,
- TV__DIF < TV__DIF__ASR - TV__HYS,
- LL, S, WELL, WES und ABF aktiv sind oder
- N < KF__xxx__NSOLL__LL__yy + NSOLL__ADD__ASR (NSOLL__ADD__ANF__ASR)

Hierin sind:

| | |
|---|---|
| TV__HYS | eine Hystereseüberlappung des Schlupfsignals |
| LL | der Leerlaufbetrieb |
| S | der Schubbetrieb |
| WELL | das Wiedereinsetzen bei Leerlauf |
| WES | das Wiedereinsetzen bei Schub |
| ABF | die Abfangfunktion aktiv |

Die weiteren Größen sind vorstehend bereits erläutert worden.

Bei dem Abbruch des ASR-Vorgangs wird die Einspritzung für alle Zylinder sofort wieder eingeschaltet und alle Zündwinkelverstellungen werden ohne Änderungsbegrenzungen, d.h. schlagartig, inaktiv. Allerdings wird eine Wandfilmkorrektur für die Einspritzung ausgeführt.

In dem Diagramm von Figur 2 sind die Wertebereiche für das Geschwindigkeitsdifferenzssignal V__DIF in km/h und für das Schlupfsignal V__DIF in Prozent und die diesen Werten des Schlupfsignals zugeordneten Betriebszustände der erfindungsgemäßen Schaltungsanordnung dargestellt. Die für das Signal V__DIF angegebenen Zahlenwerte sind nur Beispiele, sie hängen von dem jeweiligen Fahrzeugtyp ab. Der Normalbetrieb des Kraftfahrzeugantriebs liegt in den Bereichen zwischen der bereits erwähnten Schwelle TV__DIF__ASR und der noch zu erläuternden Schwelle TV__DIF__MSR für die Motorschleppmomentregelung. Unter dieser Schwelle, d.h. in dem Bereich zwischen weniger als 50 und etwas mehr als 0 % findet MSR-( = Motorschleppmomentregelung) Betrieb statt.

Für Werte des Schlupfsignals über 50 %, d.h. zwischen der Schwelle TV__DIF__ASR und der oberen Diagnosefehlergrenze, wird ASR-Betrieb durchgeführt.

Auf eine ASR-Anforderung reagiert das Motorsteuergerät in Abhängigkeit von dem horizontal aufgetragenen Wert des Schlupfsignals TV__DIF (Figur 3) wie folgt:
Ab dem Schwellwert TV__DIF__ASR wird der Zündwinkel zunehmend nach spät verstellt, bis nach dem Überschreiten eines Werts TV__DIF__2__ASR die Einspritzung von Zylinder 2 abgeschaltet und gleichzeitig der Zündwinkel um den inwzwischen erreichten Wert ZW__2__ASR vorgestellt wird. Während einer Zylinderschaltung wird eine Wandfilmkorrektur für das Wiedereinsetzen in Teillast gestartet.

Beim Überschreiten eines Wertes TV__DIF__3__ASR wird die Einspritzung von Zylinder 3 abgeschaltet und gleichzeitig der Zündwinkel um den inzwischen erreichten Wert ZW__3__ASR vorgestellt.

Überschreitet das Schlupfsignal den Wert von TV__DIF__4__ASR wird die Einspritzung von Zylinder 4 abgeschaltet und geichzeitig der Zündwinkel um den inzwischen erreichten Wert ZW__4__ASR vorgestellt.

Bei Überschreiten eines Werts von TV__DIF__1__ASR wird die Einspritzung von Zylinder 1 abgeschaltet und bei Unterschreiten von TV__DIF__1__ASR - TV__HYS wieder eingeschaltet. Die hysteresebedingten Unterschiede zwischen dem Ausschalten und dem Einschalten der einzelnen Zylinder ist in Figur 3 mit feinen Linien eingezeichnet. Auch bei der letzten Rücknahme der Zündwinkelspätverstellunggibt es eine Hysterese, die durch eine feine punktierte Linie angedeutet ist.

Bei Unterschreiten eines Wertes TV__DIF__4__ASR - TV__HYS des Schlupfsignals wird die Einspritzung von Zylinder 4 wieder eingeschaltet.

Bei Unterschreiten von TV__DIF__3__ASR - TV__HYS wird die Einspritzung von Zylinder 3 wieder eingeschaltet.

Bei Unterschreiten von TV__DIF__2__ASR - TV__HYS wird die Einspritzung von Zylinder 2 wieder eingeschaltet. Zusätzlich wird die Wiedereinsatzfunktion Teillast für die Gemischanreicherung bei allen Zylindern gestartet.

Beim Anfahren auf griffiger Fahrbahn sowie auf sehr großen Steigungen ist es zweckmäßig, die ASR-Funktion wegen Fahrbarkeitsproblemen schwächer wirksam werden zu lassen. Dazu wird für eine vorgegebene Zeitdauer T__ASR beim Übergang von einer Geschwindigkeit TV = 0 auf eine Geschwindigkeit TV > 0 oder nach der ersten Aktivierung der ASR-Funktion bei TV = 0 die ASR-Funktion erst ab einer Drehzahl

N > KF__xx__NSOLL__LL__yy + NSOLL__ADD__ANF__ASR

aktiv. Hierbei ist das erste Glied wie schon erwähnt die Leerlaufsolldrehzahl (ergibt sich aus dem Kennfeld). Das zweite Glied ist ein Schwellwert, der über der bereits erwähnten additiven Sicherheitsschwelle für den Leerlauf NSOLL__ADD__ASR liegt.

Nach Ablauf der Zeitdauer T__ANF__ASR gilt wieder letztgenannter Schwellwert für den normalen ASR-Betrieb.

Eine Zündwinkelspätverstellung gemäß Kennfeld KF__ZW__ASR wird in Richtung "spät" ohne Änderungsbegrenzung, d.h. schlagartig ausgeführt. Eine Frühverstellung auf den Basiszündwinkel oder auf einen kleineren Schlupfwert erfolgt - außer bei Abbruch der ASR-Funktion - mit einer Änderungsbegrenzung ZW__AEBG__ASR, d.h. mit endlicher Steigung.

Die Zündwinkel-Korrekturen ZW__x__ASR (x = 1, 2, 3 oder 4) beim Abschalten und beim Einschalten der Einspritzung werden ohne Änderungsbegrenzung ausgeführt. Die Zündwinkel können gegenüber dem Grundkennfeld nur nach spät verstellt werden.

Ein Motorschleppmomentregelungs- oder MSR-Eingriff wird von dem Motorsteuergerät 3 durchgeführt, wenn das Motorschleppmoment bei bremsenden Motor so groß ist, daß bei geringen Reibwerten der Fahrbahn die Antriebsräder blockieren. Bei einer zu kleinen Geschwindigkeit der Antriebsräder gegenüber den nicht angetriebenen Rädern wird vom ASR-Steuergerät 2 ein PWM-Signal TV__DIF__ABS kleiner als 50 % an das Motorsteuergerät 3 übertragen. Daraufhin sperrt das Motorsteuergerät die Schubabschaltung und gibt zusätzlich ein Signal an einen Leerlauffüllungssteller LLFS (vgl. Figur 1), der dadurch geöffnet wird und die Geschwindigkeit der Antriebsräder erhöht.

Ein MSR-Eingriff wird aktiviert, wenn

- kein Diagnosefehler bei dem Signal TV__DIF vorliegt und
- TV__DIF < TV__DIF__MSR ist,
  wobei
  TV__DIF__MSR der bereits erwähnte Schwellwert für den MSR-Betrieb ist.

Der MSR-Eingriff wird abgebrochen, wenn

- ein Diagnosefehler bei TV__DIF vorliegt,
- TV__DIF > TV__DIF__MSR + TV__HYS ist und
- im Motorbetriebszustand LL (Leerlauf)

Auf eine MSR-Anforderung reagiert somit das Motorsteuergerät 3, indem es

- die Schubabschaltung verhindert und
- den Leerlauffüllungssteller öffnet, wobei das Tastverhältnis des ihn steuernden Signals KF__TALLFS__MSR verändert wird.

Das mittlere Tastverhältnis des Schlupfsignals ist z.B. durch unterschiedliche Raddurchmesser Abweichungen unterworfen, welche zu einer Verschiebung des ASR-Eingriffs und des MSR-Eingriffs führen können. Deshalb wird, um die beiden Eingriffe reproduzierbar zu machen, dasm mittlere Tastverhältnis adaptiert.

Ist in dem Motorbetriebszustand Schubabschaltung
TV__DIF > TV__DIF__MSR,
so wird
TV__AD__DIF__ASR = TV__AD__DIF__ASR + TV__DIF__MITKO*(TV__DIF-TV__AD__DIF__ASR)
berechnet.
Hierin ist TV__AD__DIF__ASR der adaptierte Wert der (unteren)
Schwelle für den ASR-Betrieb.
Ist dem Motorbetriebszustand Teillast
TV__DIF < TV__DIF__ASR,
so wird
TV__AD__DIF__MSR = TV__AD__DIF__MSR + TV__DIF__MITKO*(TV__DIF-TV__AD__DIF__MSR)
berechnet.

Das vom ASR-Steuergerät kommende Tastverhältnis wird mit

$$\frac{TV_DIF_MSR - TV_DIF_ASR}{2}$$

korrigiert, d.h. mit dem Mittelwert für die Schwellen für ASR-Betrieb und MSR-Betrieb (vgl. Figur 2).

Anstelle der weiter vorne beschriebenen Berechnung des Schlupfsignals kann dieses auch wie folgt berechnet werden:

$$TV__DIF = \max [(v_{LV} - v_{LH}), (v_{RV} - v_{RH})] - Konst.^* |V_{LH} - V_{RH}| \quad (1)$$

wobei der letzte Term ein Korrekturglied für Kurvenfahrt ist, der die unterschiedlichen Kurvenradien berücksichtigt. Er enthält die bekannte Ackermann-Korrektur. Eine Erhöhung der Geschwindigkeitsdifferenz bei Kurvenfahrt führt zu einer erhöhten Stabilität (konstanter Faktor > 1). Im Falle einer Geschwindigkeitsdifferenz beim Anfahren wird die kleinere Geschwindigkeit erhöht (Faktor > 1), um den Schlupf zu verringern. Die Korrektur kann additiv oder muliplikativ erfolgen.

Für Fahrzeuge mit Frontantrieb kann die Gleichung (1) noch folgendermaßen ergänzt werden:

1. Um bei Kurvenfahrt geringere Schlupfwerte zu erzielen, kann TV_DIF mit

$(1 + (|v_{LH} - v_{RH}|) * C_1$

multipliziert werden.

2. Damit beim Anfahren kleinere Schlupfwerte an den Antriebsrädern entstehen, kann TV_DIF mit

$$(1 + (C_2 - \frac{v_{LH} + v_{RH}}{2}) * C_3)$$

multipliziert werden.

## Patentansprüche

1. Schaltungsanordnung zum Regeln des Antriebes eines Kraftfahrzeugs,
   - durch die beim Auftreten eines unzulässig großen Schlupfes zwischen den angetriebenen Rädern des Kraftfahrzeugs und der Fahrbahn das Motordrehmoment verändert wird, und
   - die ein die Radgeschwindigkeiten auswertendes Steuergerät (2) aufweist, das ein Steuersignal (TV_DIF ABS), das ein Maß für den festgestellten Schlupf darstellt, erzeugt und durch das ein Motorsteuergerät (3) veranlaßt wird, bei einem über einem vorgegebenen Wert liegenden Wert des Steuersignals eine Antischlupfregelung durchzuführen, indem die Kraftstoffzufuhr zu einem oder mehreren Zylindern unterbrochen und gegebenenfalls der Zündwinkel nach spät verstellt wird,

   **dadurch gekennzeichnet,**
   - daß in Abhängigkeit von dem Steuersignal (TV_DIF ABS) abwechselnd der Zündwinkel zunehmend nach spät verstellt und danach die Spätverstellung wieder zurückgenommen und gleichzeitig ein Zylinder abgeschaltet wird, und
   - daß dieser Vorgang anschließend mit Abschalten jeweils eines weiteren Zylinders wiederholt wird, bis die dem Wert des Steuersignals entsprechende Motormomentänderung erreicht worden ist.

2. Schaltungsanordnung nach Anspruch 1, dadurch gekennzeichnet, daß das die Radgeschwindigkeiten auswertende Steuergerät in das Motorsteuergerät (3) integriert ist.

3. Schaltungsanordnung nach Anspruch 1, dadurch gekennzeichnet, daß durch das Motorsteuergerät (3) beim Durchführen einer Antischlupfregelung eine Vollastanreicherung nicht durchgeführt, ein Wiedereinsetzen nach einer Schubabschaltung abgebrochen und eine Klopfregelung, eine Lambdaregelung und Lambdaadaption sowie eine Tankentlüftung gesperrt werden.

4. Schaltungsanordnung nach Anspruch 4, dadurch gekennzeichnet, daß nach Beendigung einer Antischlupfregelung die Lambdaregelung erst nach einer vorgegebenen Anzahl von Regelungszyklen wieder wirksam geschaltet wird.

5. Schaltungsanordnung nach Anspruch 1, dadurch gekennzeichnet, daß nach Beendigung einer Antischlupfregelung die Einspritzung in alle Zylinder wieder eingeschaltet, alle Zündwinkelverstellungen inaktiviert und eine Wandfilmkorrektur für die Einspritzung durchgeführt wird.

## Claims

1. Circuit arrangement for controlling the drive of a motor vehicle,
   - by means of which circuit arrangement the engine torque is varied given the occurrence of an unacceptably high slip between the driven wheels of the motor vehicle and the roadway, and

- which circuit arrangement has a control unit (2) which evaluates the wheel speeds and generates a control signal (TV__DIF ABS) which is a measure of the slip which has been ascertained, and by means of which control signal (TV__DIF ABS) an engine control unit (3) is made to carry out an traction control when a value of the control signal lies above a prescribed value, in that the supply fuel to one or more cylinders is cut off and, if appropriate, the ignition angle is retarded,

characterized in that,
- alternately the ignition angle is increasingly retarded as a function of the control signal (TV__DIF ABS) and subsequently the retarding is increased and simultaneously one cylinder is deactivated, and
- in that this process is subsequently repeated with the deactivation of one further cylinder in each case until the change in engine torque corresponding to the value of this control signal has been achieved.

**2.** Circuit arrangement according to Claim 1, characterized in that the control unit which evaluates the wheel speeds is integrated into the engine control unit (3).

**3.** Circuit arrangement according to Claim 1, characterized in that, when carrying out a traction control, the engine control unit (3) does not carry out a full-load enrichment, terminates a resumption after a deactivation of overrunning and inhibits knocking control, lambda control and lambda adaptation and tank venting.

**4.** Circuit arrangement according to Claim 4, characterized in that the lambda control is not made operative again after a traction control has ended, until after a predetermined number of control cycles.

**5.** Circuit arrangement according to Claim 1, characterized in that after a traction control has ended, the injection into all of the cylinders is activated again, all of the ignition angle adjustments are deactivated and a wall film correction for the injection is carried out.

**Revendications**

**1.** Montage de réglage le dispositif de propulsion d'un véhicule automobile,
- par lequel, lors de l'apparition d'un glissement trop grand entre les roues motrices du véhicule automobile et la chaussée, le couple moteur est modifié, et
- qui comporte un appareil de commande (2), qui évalue les vitesses de roues, qui produit un signal de commande (TV__DIF ABS) représentant une mesure du glissement détecté et qui fait qu'un appareil (3) de commande du moteur effectue, pour une valeur du signal de commande supérieure à une valeur prescrite, une régulation d'antipatinage en interrompant l'envoi du carburant à un ou à plusieurs cylindres et éventuellement en retardant l'angle d'allumage,

**caractérisé par le fait**
- qu'en fonction du signal de commande (TV__DIF ABS) alternativement l'angle d'allumage est retardé de plus en plus et ensuite le retard est à nouveau supprimé et simultanément un cylindre est débranché, et
- que ce processus est répété ensuite lors du débranchement respectivement d'un autre cylindre, jusqu'à ce que la variation du couple moteur, qui correspond à la valeur du signal de commande, ait été atteinte.

**2.** Montage suivant la revendication 1, caractérisé par le fait que l'appareil de commande, qui évalue les vitesses de roues, est intégré dans l'appareil (3) de commande du moteur.

**3.** Montage suivant la revendication 1, caractérisé par le fait que lors de l'exécution d'une régulation d'antipatinage, un enrichissement à pleine charge n'est pas exécuté par l'appareil (3) de commande du moteur, un réenclenchement est interrompu après un arrêt de la poussée et un réglage du cognement, un réglage de la valeur lambda et une adaptation de la valeur lambda ainsi qu'une mise à l'atmosphère du réservoir sont bloqués.

**4.** Montage suivant la revendication 4, caractérisé par le fait qu'après achèvement d'une régulation d'antipatinage, la régulation de la valeur lambda n'est remise en action qu'après un nombre donné à l'avance de cycles de régulation.

**5.** Montage suivant la revendication 1, caractérisé en ce qu'après l'achèvement d'une régulation d'antipatinage, l'injection dans tous les cylindres est remise en action, tous les réglages de l'angle d'allumage sont désactivés et une correction de la pellicule adhérant à la paroi est effectuée pour l'injection.

FIG 1

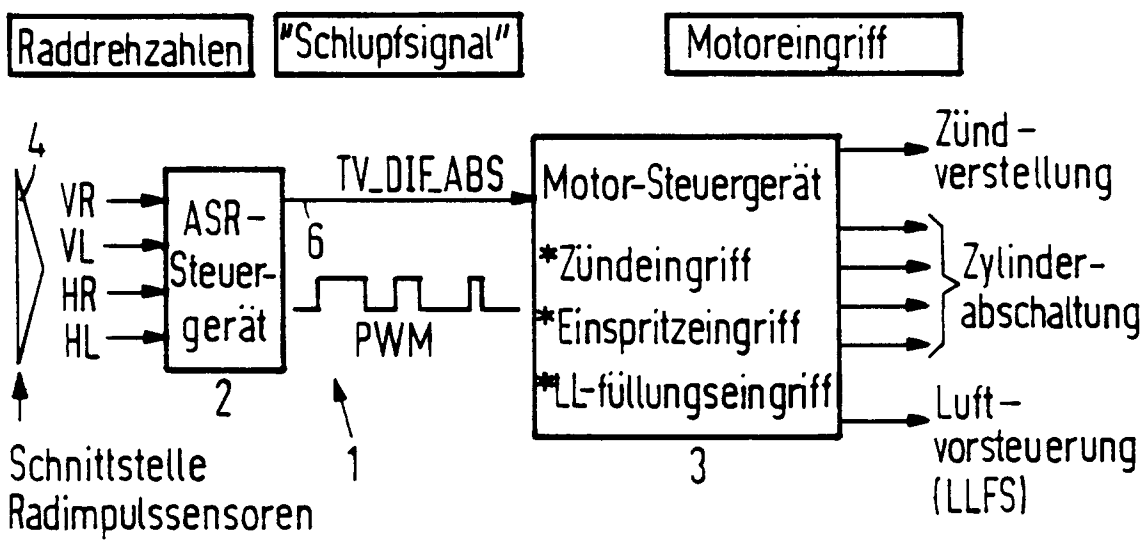
Raddrehzahlen
"Schlupfsignal"
Motoreingriff
4
VR
VL
HR
HL
ASR-Steuergerät
2
TV_DIF_ABS
6
PWM
1
Motor-Steuergerät
*Zündeingriff
*Einspritzeingriff
*LL-füllungseingriff
3
Zünd-verstellung
Zylinder-abschaltung
Luft-vorsteuerung (LLFS)
Schnittstelle Radimpulssensoren

FIG 2

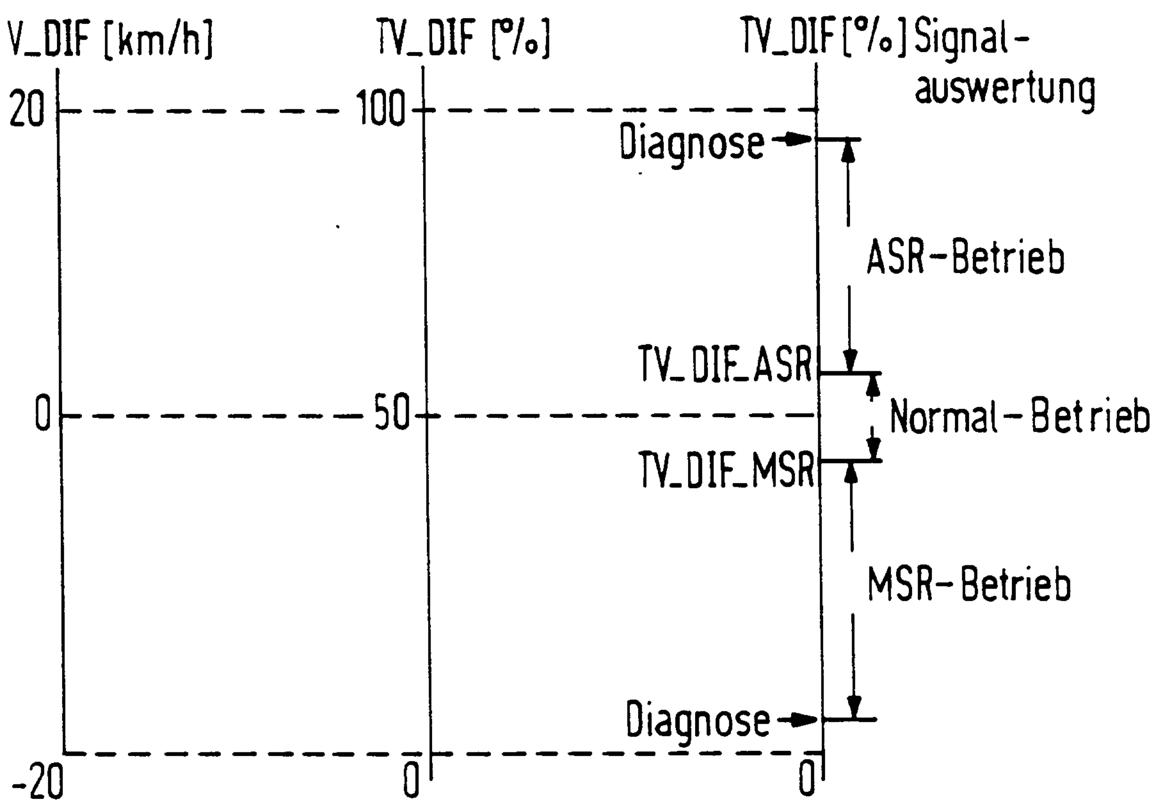
V_DIF [km/h]
TV_DIF [%]
TV_DIF [%] Signal-auswertung
20
100
Diagnose
ASR-Betrieb
TV_DIF_ASR
0
50
Normal-Betrieb
TV_DIF_MSR
MSR-Betrieb
Diagnose
-20
0
0

FIG 3

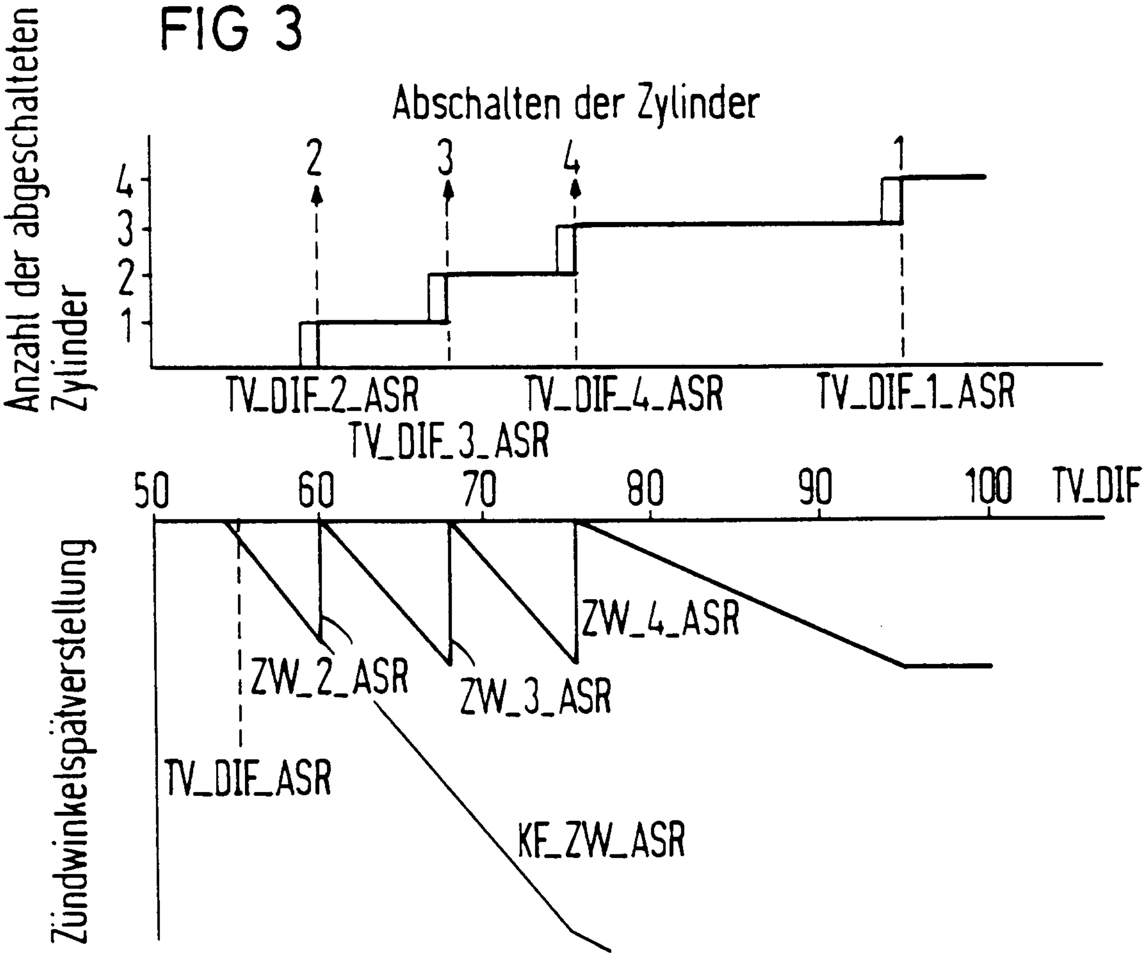
Abschalten der Zylinder
Anzahl der abgeschalteten Zylinder
4
3
2
1
2
3
4
1
TV_DIF_2_ASR
TV_DIF_3_ASR
TV_DIF_4_ASR
TV_DIF_1_ASR
50
60
70
80
90
100
TV_DIF
Zündwinkelspätverstellung
ZW_2_ASR
ZW_3_ASR
ZW_4_ASR
TV_DIF_ASR
KF_ZW_ASR

FIG 4

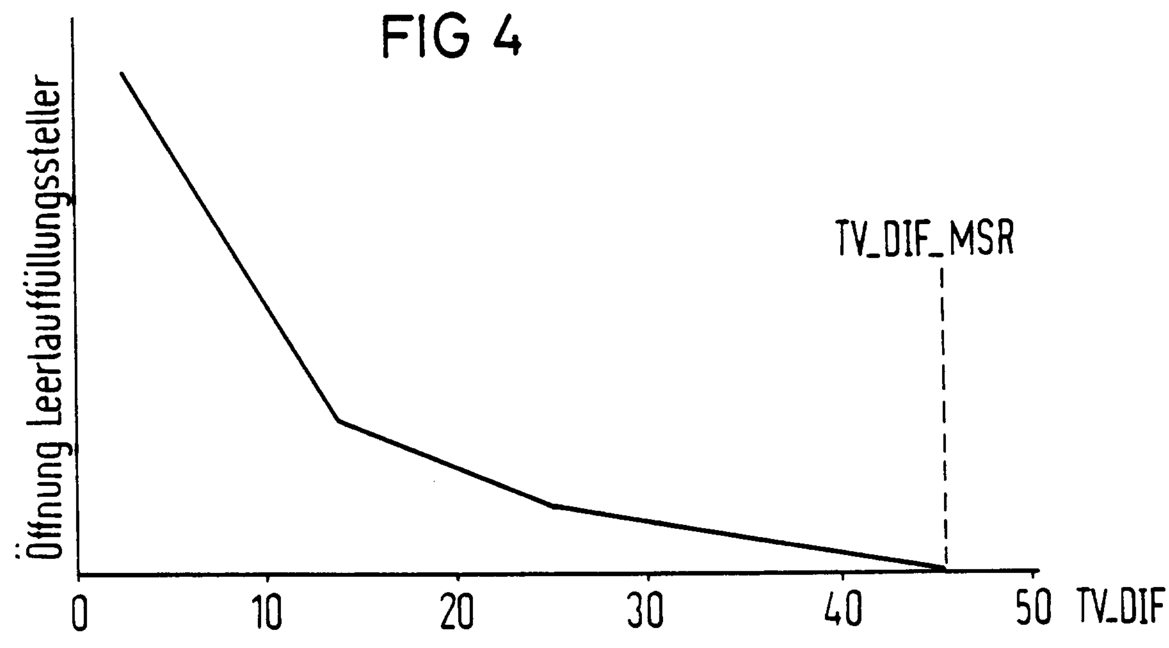
Öffnung Leerlauffüllungssteller
TV_DIF_MSR
0
10
20
30
40
50
TV_DIF